Europäisches Patentamt

European Patent Office

Office européen des brevets

(11) Veröffentlichungsnummer : **0 144 030**
**B1**

(12) EUROPÄISCHE PATENTSCHRIFT

(45) Veröffentlichungstag der Patentschrift :
06.05.87

(21) Anmeldenummer : 84113921.5

(22) Anmeldetag : 17.11.84

(51) Int. Cl.⁴ : **E 04 B   1/58**

(54) Profilrohr für die Herstellung von leicht montier- und wieder demontierbaren Aufbauten.

(30) Priorität : 25.11.83 DE 3342616

(43) Veröffentlichungstag der Anmeldung :
12.06.85 Patentblatt 85/24

(45) Bekanntmachung des Hinweises auf die Patenterteilung : 06.05.87 Patentblatt 87/19

(84) Benannte Vertragsstaaten :
**AT BE CH DE FR GB IT LI LU NL SE**

(56) Entgegenhaltungen :
**AU-B-   514 900**
**CH-A-   442 870**
**CH-A-   582 848**
**DE-A- 2 616 440**

(73) Patentinhaber : **Octanorm-Vertriebs-Gesellschaft mit
beschränkter Haftung für Bauelemente
Raiffeisenstrasse 23
D-7024 Filderstadt 4 (DE)**

(72) Erfinder : **Staeger, Hans
Richard-Wagner-Strasse 3
D-7031 Weil im Schönbuch 2/Neuweiler (DE)**

(74) Vertreter : **Wilhelm, Hans-Herbert, Dr.-Ing. et al
Wilhelm & Dauster Patentanwälte Hospitalstrasse 8
D-7000 Stuttgart 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt. wenn die Einspruchsgebühr entrichtet worden ist (Art. 99(1) Europäisches Patentübereinkommen).

Jouve. 18, rue St-Denis. 75001 Paris. France

## Beschreibung

Die Erfindung betrifft ein Profilrohr für die Herstellung von leicht montier- und wieder demontierbaren Aufbauten auf der Basis eines Gestelles nach dem Oberbegriff des Patentanspruches 1.

Solche Profilrohre sind bekannt (DE-AS 29 41-008). Sie sind im Vergleich zu ihren Außenabmessungen mit einem verhältnismäßig kleinen zylindrischen und zentrisch angeordneten Hohlraum versehen, an dessen Wandungen außen mehrere gleichmäßig auf dem Umfang verteilte Kammern anschließen, die nach außen jeweils über die Längsnuten offen sind, in welche sogenannte Zugriegelspanner von Spanngliedern eingreifen und sich an diesen Längsnuten verklammern. Die Spannglieder selbst weisen in etwa quaderförmige Außenform auf und können in entsprechende Hohlräume von ebenfalls rechteckigem Querschnitt besitzenden Profilträgern eingesetzt werden, wo sie in ihrer Lage durch nach außen durch Bohrungen in den Trägern ragende Schraubenköpfe gehalten sind, die von außen betätigbar sind, um die Zugriegel nach außen zu drücken und nach rückwärts zu ziehen. Ein gewisser Nachteil der bekannten Bauarten ist es, daß auf diese Weise nur rechteckige Profilträger mit den Profilrohren verbunden werden können, daß Profilrohre der eingangs genannten Art aber untereinander mit Hilfe der Spannglieder nicht oder nicht auf einfache Weise zusammensetzbar sind.

Es ist zwar bekannt (AU-PS 514 900) ausschließlich quadratische Profilrohre ähnlich der eingangs genannten Art als Teile für den Aufbau eines Gestelles vorzusehen, die untereinander ebenfalls durch mit Spreizgliedern versehene Spannglieder zusammenfügbar sind. Zu diesem Zweck ist im Inneren der Profilrohre ein Hohlraum vorgesehen, in den ein Spannglied mit quadratischem Querschnitt in zwei um 45° gegeneinander versetzbare Lagen einsetzbar ist. Die Profilrohre können so mit ihren Aufbauseiten fluchtend zueinander oder um 45° verdreht gegeneinander aneinandergesetzt werden. Nachteilig ist, daß dann, wenn die Außenseiten der Profilrohre nicht fluchten, keine Verriegelung der Profile untereinander möglich ist. Das quadratische Spannglied kann nämlich nicht mehr von außen befestigt werden, weil die dazu notwendige Spannschraube, die dann den Ecken des Profilrohres zugewandt ist, nicht mehr durch die Längsnuten zugänglich ist und daher weggelassen werden muß. Die Variationsmöglichkeiten und auch das ästhetische Aussehen der eingangs erwähnten Profilrohre mit acht Kanten können durch jene Bauarten auch nicht erreicht werden. Schließlich ist auch die Tragfestigkeit von Spanngliedern mit quadratischem Querschnitt nicht so hoch wie jene von Spannschlössern gleicher Größenordnung mit rechteckigem Querschnitt und unterschiedlichen Seitenlängen.

Der vorliegenden Erfindung liegt die Aufgabe zugrunde, Profilrohre der eingangs genannten Art so auszugestalten, daß der gegenseitige Anschluß mehrerer Profilrohre mit Hilfe der Spannglieder mit vielen Variationsmöglichkeiten durchführbar ist, daß aber trotzdem der Anschluß anderer Profilträger, wie beim Stand der Technik, nicht ausgeschlossen ist.

Zur Lösung dieser Aufgabe werden bei einem Profilrohr der eingangs genannten Art die kennzeichnenden Merkmale des Anspruches 1 vorgesehen. Durch diese Ausgestaltung wird der Vorteil erreicht, daß die für den Gestellaufbau vorhandenen Spannglieder nun auch stirnseitig in die bisher nur als Träger oder Verbindungsglieder für rechteckige, gebogene oder gerade Träger verwendeten Profilrohre einschiebbar sind, so daß auch zwei oder mehrere acht- oder sechseckige oder auch mehreckige Profilrohre untereinander verbindbar sind.

Es hat sich gezeigt, daß vier Aussparungspaare, deren Mittelebenen unter 45° zueinander verlaufen, bei dem achteckigen Profil ausreichen, um eine formschöne und weitgehend beliebige Anordnung weiterer Profilrohre zu ermöglichen. In den Profilrohren, die nun als Träger für die Spannglieder dienen, können bei der erfindungsgemäßen Ausgestaltung nach allen Außenseiten seitliche Bohrungen zum Zugang zu den Betätigungsteilen vorgesehen sein, die alle durch die entsprechenden Längsnuten zugänglich sind. Es genügen allerdings vier nach außen reichende, jeweils um 90° zueinander versetzte Bohrungen, um in allen Einbaulagen die Spannschlösser betätigen zu können. Bei achteckigen Profilrohren ist es aus optischen Gründen auch zweckmäßig, an der Anschlußstelle zwischen zwei Profilrohren Anpassungsstücke vorzusehen, die den normalerweise vorhandenen Abstand zwischen der geraden Stirnseite eines senkrecht an einem anderen Profilrohr angesetzten Profilrohres ausgleichen. Durch die erfindungsgemäße Ausgestaltung werden die Einsatzmöglichkeiten der bekannten Bauart von Profilrohren für die Herstellung von Messe- und Ausstellungsbauten o. dgl. wesentlich erweitert.

Die Erfindung ist anhand von Ausführungsbeispielen in der Zeichnung dargestellt und in folgender Beschreibung erläutert. Es zeigen

Figur 1 eine perspektivische Teildarstellung eines erfindungsgemäß ausgestalteten Profilrohres mit achteckigem Außenquerschnitt,

Figur 2 die schematische Darstellung der Ausbildung des hohlen Innenraumes des Profiles der Fig. 1,

Figur 3 die Explosionsdarstellung eines Profiles gemäß Fig. 1 mit einem stirnseitig in dieses Profilrohr einschiebbaren Spannglied,

Figur 4 das Profil der Fig. 1 und 3 mit dem eingeschobenen Spannglied vor der Verbindung mit einem weiteren senkrechten Profilrohr mit der gleichen Ausbildung.

Figur 5 drei erfindungsgemäß zusammengesetzte Profilrohre gemäß Fig. 1 und

Figur 6 vier zusammengesetzte Profilrohre gemäß Fig. 1, wobei die wahlweise Anordnung des vierten Profilrohres in mehreren Lagen angedeutet ist.

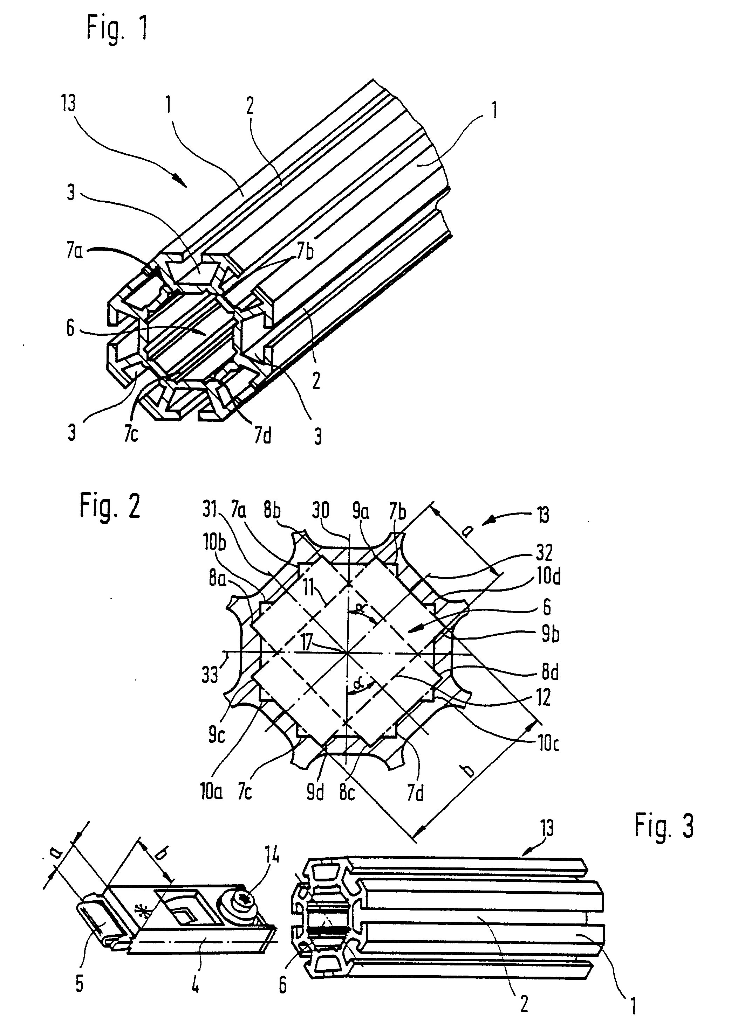

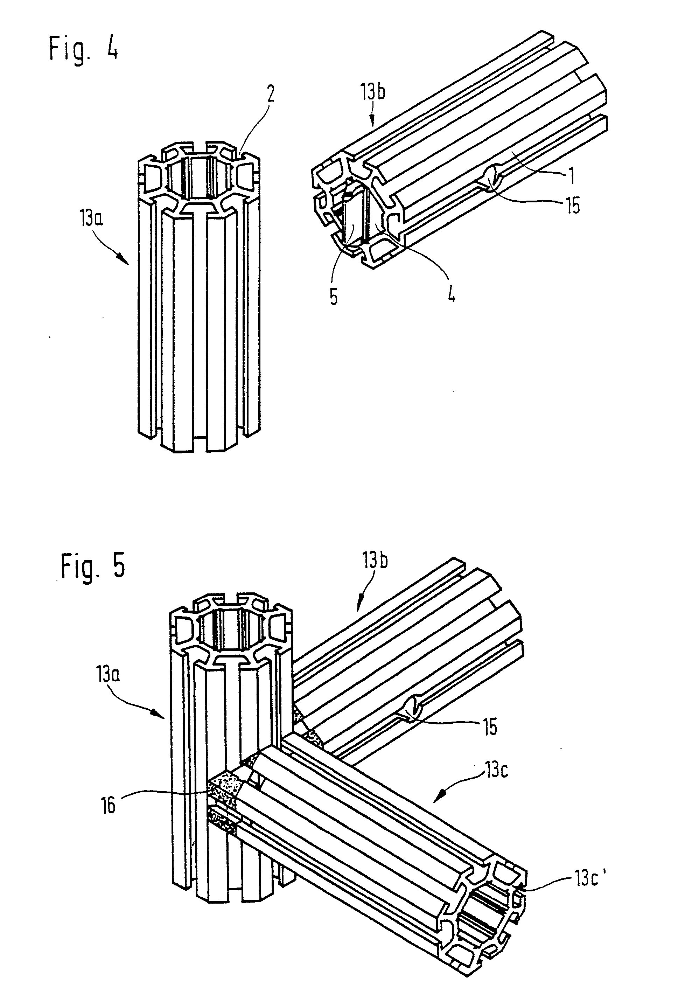

In der Fig. 1 ist ein Ausführungsbeispiel eines erfindungsgemäßen Profilrohres mit acht Ecken gezeigt, dessen acht Längsseiten 1 jeweils mit Längsnuten 2 versehen sind, die dadurch hinterschnitten sind, daß sie jeweils in Kammern 3 münden, die ebenfalls parallel zur Achse des Profilrohres verlaufen. In bekannter Weise und wie auch noch anhand von Fig. 4 erläutert werden wird, können in die Längsnuten 2 Zugriegelspanner 5 von Spanngliedern 4 eingesetzt werden, die in den Längsnuten 2 dadurch verspannbar sind, daß sie nach dem Eingreifen in die Kammern 3 nach außen gespreizt und in Richtung zum Spannglied 4 zurückgezogen werden, was in bekannter Weise durch von außen betätigbare Schraubglieder 14 über nicht gezeigte Exzenter geschieht.

Der hohle Innenraum 6 des achteckigen Profiles der Fig. 1 ist, wie näher aus Fig. 2 hervorgeht, mit mehreren nutförmigen Aussparungen 7a, 7b, 7c, 7d bzw. 8a, 8b, 8c, 8d und 9a bis 9d sowie 10a bis 10d versehen, die jeweils parallel zueinander und diametral gegenüber angeordnet sind. Dabei sind alle Aussparungen 7a, 7b, 7c, 7d — und auch die anderen Aussparungen — parallel zueinander angeordnet. Die Aussparungen (z. B. 9a und 9b), die jeweils eine dreieckigen und gleichschenkligen Querschnitt haben, bestimmen dabei durch ihren Abstand a zueinander und durch den Abstand b gegenüber den beiden zugeordneten, aber diametral gegenüberliegenden Aussparungen 9c und 9d den gestrichelt durch die Linie 11 und 12 und durch die jeweiligen Verbindungslinien der äußersten Ecken der Aussparungen 9a, 9b, 9d begrenzten, freien, rechteckigen Querschnitt, in der stirnseitig ein Spannglied 4 in das Profilrohr 13 einschiebbar ist. Dieser Querschnitt entspricht dem Querschnitt des Spanngliedes 4, wie aus Fig. 3 erkennbar ist. Durch diese Ausgestaltung wird es möglich, das Spannglied 4 mit seinen rechteckigen Abmessungen jeweils in vier verschiedenen Winkellagen in das Profilrohr 13 stirnseitig einzusetzen, wenn das zur Betätigung der Zugriegelspanner 5 notwendige Schraubglied 14, das mit einem Exzenter verbunden sein kann, vorher entfernt ist.

Fig. 4 zeigt das stirnseitig eingeschobene Spannglied 4 mit den Zugriegelspannern 5, die in der dargestellten Lage so zusammengeschoben sind, daß sie sich durch die Längsnuten 2 einführen lassen. Durch die seitliche, in die Längsnuten 2 mündende Öffnung 15 kann nun das Schraubglied 14 mit dem Exzenter betätigt werden, der zwischen die Zugriegelspanner 5 greift, sie seitlich auseinanderdrückt und in Richtung zum Spannglied 4 zieht, so daß das Profilrohr 13a rechtwinklig mit dem Profilrohr 13b verbindbar ist.

Fig. 5 zeigt drei untereinander verbundene Profilrohre 13a, 13b und 13c, die jeweils durch die stirnseitig eingeschobenen Spannglieder 4, die in Fig. 5 nicht erkennbar sind, rechtwinklig untereinander zusammengehalten sind. Aus optischen Gründen, aber auch um eine unnötige Verschmutzung oder ein unbeabsichtigtes Verklemmen von außen zugeführter Teile zu vermeiden, sind stirnseitig an den beiden Profilrohren 13b und 13c jeweils Anpassungsstücke 16 vorgesehen, die den bei achteckigen Profilen sonst bei einem stirnseitigen Anschluß zwangsläufig entstehenden Abstand überbrücken.

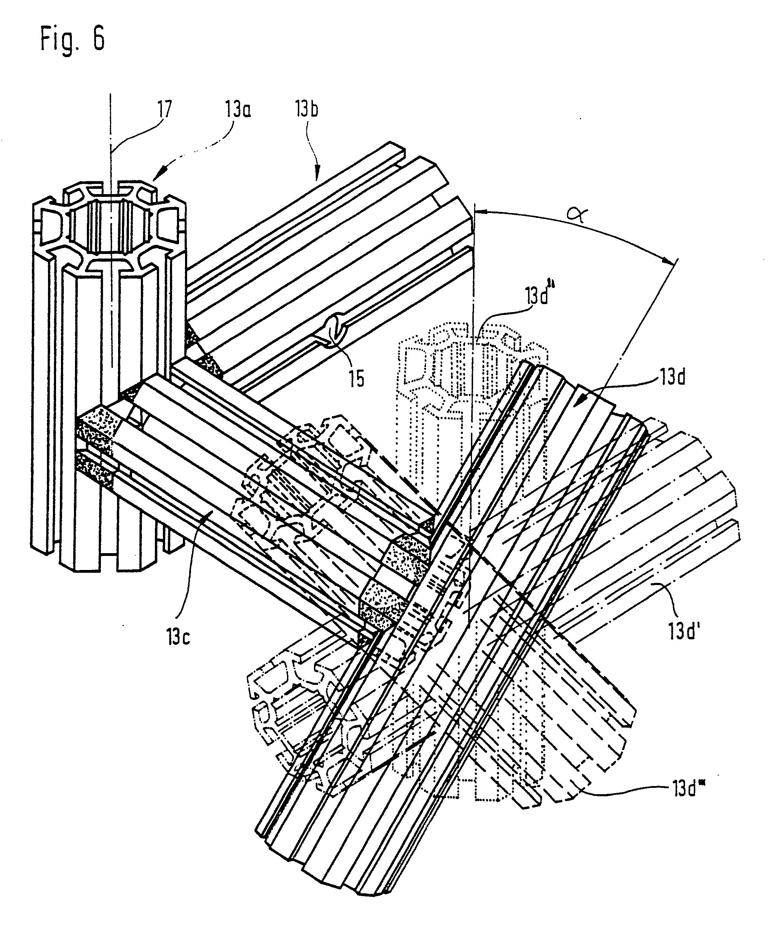

Fig. 6 zeigt, daß durch Einsetzen eines weiteren Spanngliedes an der Stirnseite 13c' des Profilrohres 13c der Fig. 5 ein viertes Profilrohr 13d an das Profilrohr 13c angeschlossen werden kann, und zwar im Ausführungsbeispiel unter einem Winkel von 45° zu der Achse 17 des senkrecht stehenden Profilrohres 13a. Wie strichpunktiert, gestrichelt und punktiert angedeutet ist, lassen sich aber auch bei geeigneter Verdrehung des Spanngliedes im Profilrohr 13c die Lagen 13d', 13d", 13d''' erreichen, von denen die Lage 13 d' parallel zu dem Profilrohr 13b, die Lage 13d" parallel zu dem Profilrohr 13a und die Lage 13d''' um 90° versetzt zu der ausgezogenen Lage des Profilrohres 13d ist. Fig. 6 veranschaulicht damit die Fülle der Variationsmöglichkeiten des Zusammenbaus von Profilrohren 13a bis 13d. Es ist natürlich nach wie vor möglich, wie beim Stand der Technik, auch noch andere Profilteile, beispielsweise gebogene oder gerade rechteckige Trägerprofile mit oder ohne Längsnuten an den Profilrohren 13a bis 13d über Spannglieder 4 anzuschließen, wie das auch beim Stand der Technik möglich war. Die Winkelvariation von Profilrohren 13a bis 13d jedoch verbessert die Aufbaumöglichkeiten von Gestellen nach dem Stand der Technik.

**Patentansprüche**

1. Profilrohr für die Herstellung von leicht montier- und wieder demontierbaren Aufbauten auf der Basis eines Gestelles, insbesondere für Messe- und Ausstellungsbauten, das eine Außenkontur in der Form eines gleichmäßigen Achteckes aufweist, und auf jeder der acht gleich großen Außenseiten je eine hinterschnittene Längsnut (2) aufweist, in die Kupplungsteile von Spanngliedern (4) mit einem Außenquerschnitt eines Rechteckes mit ungleichen Seiten zur Verbindung mit weiteren Profilteilen eingreifen, wobei das Profilrohr einen allseits geschlossenen hohlen Innenraum aufweist, dadurch gekennzeichnet, daß der hohle Innenraum (6) mit vier Aussparungspaarungen (7a bis 7d, 8a bis 8d, 9a bis 9d, 10a bis 10d) versehen ist, die aus jeweils paarweise parallel nebeneinander und diametral gegenüberliegenden Paaren von dreieckigen Nuten bestehen, deren Abstand (a) gegeneinander und deren Abstand (b) zu den gegenüberliegenden Paaren den Abmessungen des Außenquerschnittes der Spannglieder (4) angepaßt ist, wobei die Aussparungspaarungen symmetrisch zu jeweils einer Mittelebene (30 bis 33) angeordnet sind, die durch die Achse (17) des Profilrohres (13) verlaufen, jeweils gegenüber den benachbarten Mittelebenen unter 45° geneigt sind und jeweils parallel zu je zwei Außenseiten des Profilrohres verlaufen.

2. Profilrohr nach Anspruch 1, dadurch gekennzeichnet, daß stirnseitig zwischen zwei untereinander verbundenen Profilrohren Anpassungsstücke (16) zum Ausgleich des Abstandes zwischen dem Außenumfang eines Profilrohres und der Stirnseite des anderen Profilrohres vorgesehen sind.

3. Profilrohr nach Anspruch 1 für Spannglieder mit seitlich zugängigen, verdrehbaren Stellgliedern für die Kupplungsteile, dadurch gekennzeichnet, daß in den Seitenflächen (1) des Profilrohres in die Längsnuten (2) mündende Öffnungen (15) zur Betätigung der Verstellteile (14) der Spannglieder (4) vorgesehen sind.

## Claims

1. Profiled tube for making easily assembled and dismantled structures on the basis of a frame, particularly for trade fair and exhibition structures, the tube having an external contour in the form of a regular octagon and having on each of the eight equally sized outer sides an undercut longitudinal slot (2) into which coupling parts of clamping members (4) having an external cross-section of a rectangle of unequal sides can engage for connection to other profiled parts, the profiled tube having a hollow interior which is enclosed on all sides, characterised in that the hollow interior (6) is provided with four pairs of recesses (7a to 7d, 8a to 8d, 9a to 9d, 10a to 10d), which consist of in each case pairs of parallel adjacent and diametrically opposite pairs of rectangular grooves, of which the distance (a) apart and of which the distance (b) to the oppositely disposed pairs, are adapted to the dimensions of the external cross-section of the clamping members (4), the pairs of recesses being disposed symmetrically of a respective central plane (30 to 33), the central planes extending through the axis (17) of the profile tube (13) being in each case inclined at an angle of 45 to the adjacent central planes and extending in each case parallel with two outside faces of the profile tube.

2. Profile tube according to Claim 1, characterised in that to compensate for the gap between the outer periphery of one profile tube and the end face of the other profile tube, adapting pieces (16) are provided at the end between two interconnected profile tubes.

3. Profile tube according to Claim 1 for clamping members having laterally accessible rotatable positioning members for the coupling parts, characterised in that apertures (15) for actuation of the displacement parts (14) of the clamping members (4) are provided in the lateral faces (1) of the profile tube and open out into the longitudinal slots (2).

## Revendications

1. Tube profilé pour la réalisation de constructions facilement montables et démontables, sur la base d'une structure, notamment pour des constructions destinées à des foires ou des expositions, tubes profilés comportant un contour externe revêtant la forme d'un octogone régulier, et comportant, sur chacun des huit côtés externes de mêmes dimensions, une gorge longitudinale (2) à contre-dépouille dans laquelle viennent en prise des pièces d'accouplement d'éléments de bridage (4) avec la section transversale externe d'un rectangle à côtés inégaux, pour permettre la jonction avec d'autres pièces profilées, le tube profilé comportant un espace interne creux fermé de tous côtés, tube profilé caractérisé en ce que l'espace interne creux (6) est muni de quatre paires d'évidements (7a à 7d, 8a à 8d, 9a à 9d, 10a à 10d), qui sont constitués de paires de rainures triangulaires placées respectivement par paires parallèlement les unes à côté des autres, et de façon diamétralement opposée, rainures dont l'intervalle (a) l'une par rapport à l'autre et dont l'intervalle (b) par rapport aux paires opposées, sont adaptés aux dimensions de la section transversale externe de l'élément de bridage (4), les paires d'évidements étant respectivement disposées symétriquement par rapport à un plan médian (30 à 33), et qui passe par l'axe (17) du tube profilé (13), et étant inclinées respectivement de 45° par rapport au plan voisin, et s'étendant respectivement en parallèle vers chacun des deux côtés externes du tube profilé.

2. Profilé selon la revendication 1, caractérisé en ce que, côté frontal, entre deux tubes profilés reliés entre eux, il est prévu des pièces d'adaptation (16) pour compenser l'intervalle entre la périphérie externe d'un tube profilé et la face frontale de l'autre tube profilé.

3. Tube profilé selon la revendication 1, pour des éléments de bridage avec des organes de réglage pour les pièces d'accouplement, organes susceptibles d'être tournés et accessibles latéralement, tube profilé caractérisé en ce que des ouvertures (15) débouchant sur les surfaces latérales (1) du tube profilé dans les gorges longitudinales (2), sont prévues pour l'actionnement des pièces de réglage (14) des éléments de bridage (4).

Fig. 1

Fig. 2

Fig. 3

Fig. 4

2

13b

13a

1

15

5

4

Fig. 5

13b

13a

15

13c

16

13c'

Fig. 6